# EUROPEAN PATENT APPLICATION

(11) **EP 4 651 429 A1**
(43) Date of publication of application: **19.11.2025**
(21) Application number: 23916146.6
(22) Date of filing: 16.11.2023
(51) Int. Cl.: H04L 9/32, G06F 21/62

(54) **PROGRAM, INFORMATION PROCESSING METHOD, AND INFORMATION PROCESSING APPARATUS**

(30) Priority: 12.01.2023 JP 2023002803
(71) Applicant: FUJITSU LIMITED, Kawasaki-shi, Kanagawa 211-8588 (JP)
(72) Inventor: YAMAOKA, Mebae, Kawasaki-shi, Kanagawa 211-8588 (JP)
(74) Representative: Hoffmann Eitle
(86) International application number: PCT/JP2023/041326
(87) International publication number: WO 2024/150529

(57) **Abstract**

It is possible to detect multiple uses of verifiable credentials (VCs).

A processing unit 12 acquires first identification information corresponding one-to-one to a first user, issued by a first system 21 that issues identification information of users. The processing unit 12 acquires second identification information of a content item to be used by the first user. The processing unit 12 acquires input information input by the first user with respect to the content item. When transmitting the input information and the identity information of the first user to the second system 22, the processing unit 12 transmits a hash value y corresponding to the set of the first identification information and the second identification information to the second system 22, the hash value y being used to identify the user of the content item.

## Description

### Technical Field

The present embodiments discussed herein relate to a computer program, an information processing method, and an information processing apparatus.

### Background Art

Currently, a system known as a distributed identity infrastructure is becoming increasingly widespread. The distributed identity infrastructure enables individual users to manage their identity information such as age, gender, and qualifications, as digital data. For example, the distributed identity infrastructure provides a mechanism for managing personal identity information in a temper-resistant manner by appending a digital signature of an issuer, which guarantees the authenticity of the identity information, to the identity information.

From the viewpoint of security, a user having certain data may wish to prove to a third party that the user knows the data, without disclosing the data itself to the other party. In such cases, a cryptographic technique called zero-knowledge proof may be used.

For example, in the zero-knowledge proof, a certain information processing apparatus generates, from data, zero-knowledge proof information in such a manner that the probability of the zero-knowledge proof information being generated accidentally without knowing the data is sufficiently small, and transmits the zero-knowledge proof information to another information processing apparatus. The other information processing apparatus verifies the received zero-knowledge proof information according to a predetermined algorithm, to determine whether the received zero-knowledge proof information proves the knowledge possessed by the sender user.

In addition, there has been proposed a mutual authentication method which uses qualification information generated by a center that guarantees that the prover is a qualified person and in which both the qualification of the prover and the authentication by a verifier are performed using zero-knowledge proof.

In addition, there has been proposed a computer that generates a zero-knowledge proof indicating that a proof creator owns a certain identity. There has also been proposed a system that performs verification of digital identities of users through use of zero-knowledge proof parameters, whereby personal identification information may be preserved.

### Citation List

### Patent Literatures

PTL 1: International Publication Pamphlet No**.** WO 2022/153377
PTL 2: Japanese Laid-open Patent Publication No. H11-234263
PTL 3: U.S. Patent Application Publication No. 2021/0056227
PTL 4: U.S. Patent Application Publication No. 2021/0049588

### Summary of Invention

### Technical Problem

A user is able to obtain verifiable credentials (VCs) issued by predetermined issuers, and disclose his/her identity information to others using the VCs in order to use various services. A VC is a set of pieces of personal identity information of the user, and has attached hereto a digital signature of the issuer. A VC includes identification information called a decentralized identifier (DID). Identity information that is presented to the third party based on a VC may be referred to as verifiable presentation (VP).

Here, from the viewpoint of privacy protection, it is not preferable that the use histories of VCs presented for different purposes to use a plurality of services are linked via a single DID. Therefore, it is conceivable that a user has a plurality of DIDs and uses different DIDs for different services, thereby preventing linkage of the use histories of VCs.

However, if an issuer issues a VC for each of a plurality of DIDs of a certain user in order to protect user's privacy, a problem arises in that the user is able to behave as if he or she were a plurality of users for one content item provided by a service. For example, in a posting-type information sharing service, a single user may be able to post comments on the same content item, such as one news article, as different posters a plurality of times (for example, as many times as the number of DIDs held by the user).

In one aspect, an object of the present disclosure is to enable detection of multiple uses of VCs.

### Solution to Problem

In one aspect, there is provided a computer program that causes a computer to perform the following process. The computer acquires first identification information corresponding one-to-one to a first user, issued by a first system that issues identification information of users. The computer also acquires second identification information of a content item to be used by the first user. When transmitting input information input by the first user with respect to the content item and identity information of the first user to a second system, the computer transmits a hash value corresponding to a set of the first identification information and the second identification information to the second system, the hash value being used to identify a user of the content item.

In another aspect, there is provided an information processing method that is executed by a computer. In yet another aspect, there is provided an information processing apparatus including a storage unit and a processing unit.

### Advantageous Effects of Invention

According to one aspect, detection of multiple uses becomes possible.

### Brief Description of Drawings

[FIG. 1] FIG. 1 is a view for describing an information processing apparatus according to a first embodiment.
[FIG. 2] FIG. 2 illustrates an example of an information processing system according to a second embodiment.
[FIG. 3] FIG. 3 is a block diagram illustrating an example of hardware of a terminal device.
[FIG. 4] FIG. 4 is a block diagram illustrating an example (part 1) of functions of the information processing system.
[FIG. 5] FIG. 5 is a block diagram illustrating an example (part 2) of functions of the information processing system.
[FIG. 6] FIG. 6 illustrates examples of zero-knowledge proof descriptions.
[FIG. 7] FIG. 7 illustrates an example of an endorsement data table.
[FIG. 8] FIG. 8 is a flowchart illustrating an example of holder ID acquisition.
[FIG. 9] FIG. 9 is a flowchart illustrating an example of endorsement data transmission.
[FIG. 10] FIG. 10 is a flowchart illustrating an example of endorsement data verification.
[FIG. 11] FIG. 11 illustrates an example of multiple use detection.
[FIG. 12] FIG. 12 illustrates a comparative example.

### Description of Embodiments

Hereinafter, embodiments will be described with reference to the drawings.

### [First Embodiment]

A first embodiment will be described.

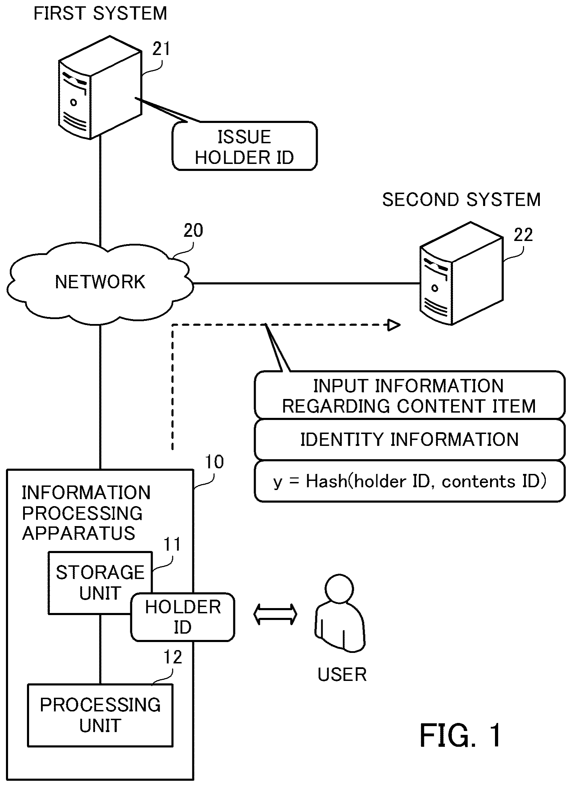

FIG. 1 is a view for describing an information processing apparatus according to the first embodiment.

The information processing apparatus 10 is a transmission apparatus that transmits proof information for proving that a prover possesses certain information. The information processing apparatus 10 may be a client apparatus operated by the prover or a server apparatus that handles data of the prover. The information processing apparatus 10 may be referred to as a computer. The information processing apparatus 10 is connected to a network 20. A first system 21 and a second system 22 are connected to the network 20. The network 20 is, for example, the Internet or a wide area network (WAN).

The first system 21 is an information processing system that issues identification information of users who are provers. The first system 21 may be implemented by a single information processing apparatus. For example, the first system 21 may be an information processing system operated by a public certification authority or an information processing system operated by a private certification authority. The certification authority is an issuer that checks personal information of a user, and issues identification information that corresponds one-to-one to the user, using the first system 21. The identification information may be referred to as a holder ID. The first system 21 may issue identity information to the user. A piece of identity information or a set of pieces of identity information issued to the user may be referred to as a VC. In this connection, the issuer issues the identity information with a digital signature of the issuer attached, to the user.

Here, a single user is allowed to have a plurality of DIDs, which are included in VCs. Unlike DIDs, a single user is not allowed to have a plurality of holder IDs, but is associated with one holder ID on a one-to-one basis. For example, the first system 21 may generate a random value as the holder ID, or may generate a unique holder ID based on a combination of pieces of identity information of the user included in a VC. For example, the first system 21 may use a predetermined calculation value (for example, a hash value) based on a set of a name and a telephone number, as the holder ID.

The second system 22 is an information processing system that manages input information input by a user with respect to a content item provided by a predetermined service, together with identity information of the user. The second system 22 may be implemented by a single information processing apparatus. The second system 22 may be an information processing system operated by a service provider or an information processing system operated by an entity other than the service provider. For example, in the case where the service is an information sharing service and the content item is a news article, the input information regarding the content item may be a comment posted by the user with respect to the news article. In this case, the identity information of the user managed together with the posted comment in the second system 22 may be the address of the user. Such an association of the post with a VC (identity information) improves the reliability of the post content.

A storage unit 11 may be a volatile semiconductor memory such as a random access memory (RAM) or a non-volatile storage device such as a hard disk drive (HDD) or a flash memory. A processing unit 12 is, for example, a processor such as a central processing unit (CPU), a graphics processing unit (GPU), or a digital signal processor (DSP). However, the processing unit 12 may include an electronic circuit for a special use, such as an application specific integrated circuit (ASIC) or a field programmable gate array (FPGA). The processor executes a program stored in a memory (or the storage unit 11) such as a RAM. A set of a plurality of processors may be referred to as a "multiprocessor" or simply as a "processor".

The processing unit 12 acquires first identification information corresponding one-to-one to a first user, issued by the first system 21. The first user is a user who uses the information processing apparatus 10. The holder ID of the first user corresponds to the first identification information of the first user. The processing unit 12 stores the first identification information in the storage unit 11. The first identification information is kept secret by the first user.

In addition, the processing unit 12 acquires second identification information of a published content item. The second identification information may be, for example, an identification number uniquely assigned to the content item in advance, the uniform resource locator (URL) of the content item, or a hash value based on the URL. For example, the second identification information may be acquired from the second system 22 or may be acquired from a device other than the second system. The second identification information may be referred to as a contents ID.

The processing unit 12 calculates a hash value y corresponding to a set of the first identification information and the second identification information when transmitting input information input by the first user with respect to the content item and the identity information of the first user to the second system 22. The hash value y is calculated by inputting the first identification information and the second identification information to a predetermined hash function Hash. That is, y = Hash(holder ID, contents ID). A hash value y is used to identify a user of a content item.

The processing unit 12 transmits the input information input by the first user with respect to the content item, the identity information of the first user, and the hash value y to the second system 22. The identity information transmitted to the second system 22 may be referred to as VP. The VP may be part or all of the set of pieces of identity information included in the VC. The identity information (i.e., VP) provided to the second system 22 may indicate a condition that an item value set in the VC satisfies. For example, in the case where an item in the VC indicates that the first user is 30 years old, the identity information (i.e., VP) may indicate that the first user is 20 years old or older. Therefore, the identity information transmitted to the second system 22 is not capable of identifying the first user individual.

The second system 22 receives the input information regarding the content item, the identity information, and the hash value y from the information processing apparatus 10, and stores the input information, the identity information, and the hash value y in association with the contents ID in a predetermined storage device of the second system 22. For example, the second system 22 is able to detect the presence or absence of multiple uses of a certain content item carried out by a single user, based on hash values y stored in the storage device. Specifically, in the case where there are a plurality of pieces of input information that correspond to the same hash value y associated with a single contents ID, the second system 22 determines that the plurality of pieces of input information have been input over a plurality of times by the same user.

In addition, the second system 22 may verify the digital signature of the issuer attached to the identity information to confirm that the identity information has been issued by a trusted issuer. Accordingly, the reliability of the identity information of the first user who has inputted the input information regarding the content item is guaranteed. If the verification of the digital signature has failed, the second system 22 treats the input information regarding the content item as unreliable information.

Furthermore, the second system 22 may execute control so as not to provide other users with information input over a plurality of times by the same user with respect to a certain content item. Alternatively, the second system 22 may execute control so as to provide other users with only the first information or the most recent information among the information input over the plurality of times. Further, the above-described detection of the presence or absence of multiple uses and the above-described verification of a digital signature for identity information may be performed by another apparatus that receives the input information regarding the content item with the contents ID from the second system 22.

As described above, the information processing apparatus 10 acquires the first identification information corresponding one-to-one to the first user, issued by the first system 21 that issues the identification information of users. The information processing apparatus 10 acquires the second identification information of a content item to be used by the first user. When transmitting input information input by the first user with respect to the content item and the identity information of the first user to the second system 22, the information processing apparatus 10 transmits the hash value corresponding to the set of the first identification information and the second identification information to the second system. The hash value is used by the second system 22 or another apparatus to identify the user of the content item. This makes it possible to detect multiple uses of a VC corresponding to the identity information. In other words, it becomes possible to detect multiple uses of the same content item carried out by the same user using a plurality of pieces of identity information corresponding to a plurality of VCs.

Here, the same hash value y is calculated from the same set of the first identification information (holder ID) and the second identification information (contents ID). Therefore, by detecting the presence or absence of a plurality of pieces of input information corresponding to the same hash value y for one content item, the second system 22 or the other apparatus is able to detect multiple uses of the content item carried out by the same user using a plurality of VCs. In the above example in which the content item is a news article, the second system 22 or the other apparatus is able to detect multiple posts submitted by the same user.

In the case where there are hash values y1 = Hash(x1, contents ID1) and y2 = Hash(x2, contents ID2) generated from different pieces of second identification information, a verifier (the second system 22 or the other apparatus) is not able to determine whether x1 = x2**.** That is, different hash values y are generated from the same first identification information (holder ID) and different second identification information (contents ID). Therefore, the second system 22 or the other apparatus is unable to determine from the hash values y whether different content items have been used by the same user. Thus, the associations of the user with different content items are concealed.

In this connection, the processing unit 12 may further improve the reliability of information to be transmitted from the information processing apparatus 10 to the second system 22, by using a zero-knowledge proof technique as follows.

The zero-knowledge proof technique is a technique for proving to a verifier that a prover having secret information (witness) satisfying a certain condition (statement) for public information (instance) knows the secret information without revealing the secret information itself. See, for example, the following literatures 1 and 2 for zero-knowledge proof techniques.

Literature 1: Groth, Jens, "On the size of pairing-based non-interactive arguments," Annual international conference on the theory and applications of cryptographic techniques, Springer, Berlin, Heidelberg, 2016.

Literature 2: Ben-Sasson, Eli, et al., "Scalable, transparent, and post-quantum secure computational integrity," IACR Cryptol, ePrint Arch, 2018.

Note that a zero-knowledge proof technique other than those described in the above literatures 1 and 2 may be used.

The processing unit 12 may further acquire a digital signature Sig of the issuer with respect to the first identification information. The processing unit 12 may generate zero-knowledge proof information π for proving that the first user has knowledge of the first identification information used for calculating the hash value y and knowledge of the digital signature Sig, which is successfully verified using the public key of the issuer. The zero-knowledge proof information may be referred to as a zero-knowledge proof description. The processing unit 12 may transmit the zero-knowledge proof information π, in addition to the identity information of the first user and the hash value y, to the second system.

Here, for example, the zero-knowledge proof information indicating that the prover knows the input x for the hash value y is represented as follows.
Instance: y
Witness: x
Statement: y = Hash(x)

According to this representation example, the proof content of the zero-knowledge proof information π is represented as follows.
Instance: contents ID, y, pk_i
Witness: holder ID, Sig
Statement:
   I. y = Hash(holder ID, contents ID)
   II. Verify_{pk_i} (holder ID, Sig) = Valid

Here, pk_i is a public key of the issuer (that is, the first system 21) having issued the first identification information. The public key pk_i is used to verify the digital signature Sig.

The zero-knowledge proof information π is information that proves that the first user serving as a prover has knowledge of the holder ID and the digital signature Sig, without disclosing the holder ID and the digital signature Sig. The zero-knowledge proof information π is, for example, a list of numerical values.

In this case, the second system 22 further receives the zero-knowledge proof information π from the information processing apparatus 10 and stores the zero-knowledge proof information π in the storage device of the second system 22. The second system 22 or the other apparatus verifies the zero-knowledge proof information π, in addition to the verification of the presence or absence of multiple uses of the content item, on the basis of y**.** By doing so, the second system 22 or the other apparatus is able to confirm that the first user does not use the content item with a falsified holder ID, which is the first identification information. That is, in the case where the verification of the zero-knowledge proof information π is successful, it is determined that the first user does not use a falsified holder ID. On the other hand, in the case where the verification of the zero-knowledge proof information π has failed, it is determined that the first user uses a falsified holder ID.

For example, even if the first user generates a hash value y' using a holder ID' instead of the holder ID issued by the first system 21, the first user is not able to create a digital signature Sig' of the first system 21 for the holder ID'. Therefore, the processing unit 12 is not able to generate zero-knowledge proof information π satisfying the above Statement II. In the manner described above, the information processing apparatus 10 is able to prevent multiple uses (for example, multiple posts) of a content item carried out by a malicious user.

### [Second Embodiment]

Next, a second embodiment will be described.

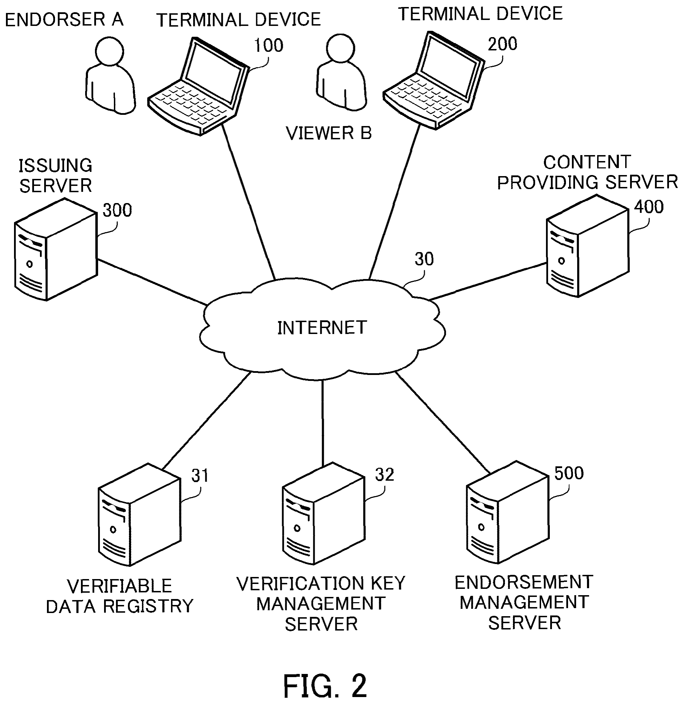

FIG. 2 illustrates an example of an information processing system according to the second embodiment.

The information processing system of the second embodiment provides a distributed identity infrastructure. The information processing system according to the second embodiment includes terminal devices 100 and 200, an issuing server 300, a content providing server 400, and an endorsement management server 500. The terminal devices 100 and 200, the issuing server 300, the content providing server 400, and the endorsement management server 500 are connected to the Internet 30. A verifiable data registry 31 and a verification key management server 32 are also connected to the Internet 30.

The terminal device 100 is a client computer that is used by a user called an endorser. The endorser is a poster who submits posts on a content item provided by the content providing server 400. The endorser corresponds to a holder holding identity information.

Information posted by the endorser is referred to as endorsement data. The posted endorsement data is managed by the endorsement management server 500. Specifically, the terminal device 100 transmits endorsement data on a content item to the endorsement management server 500 together with the identity information of the endorser. At the same time, the terminal device 100 transmits a hash value calculated from a contents ID, which is the identification information of the content item, and a holder ID unique to the endorser, and zero-knowledge proof information that proves that the endorser has the proper holder ID.

A piece of identity information or a set of pieces of identity information of the endorser is issued by the issuing server 300 as a VC. A digital signature of an issuer serving as a certification authority is attached to the VC. The VC includes a DID. The endorser is able to present a VP indicating all or some pieces of identity information included in the VC to a verifier. For example, the endorser is able to present the VP to the verifier while concealing some pieces of identity information included in the VC. The VP also contains the digital signature of the issuer corresponding to the VC. Even if some pieces of identity information included in the VC is concealed in the VP, the verifier is able to verify the digital signature of the issuer in the VP with the public key of the issuer.

In the following description, a piece of identity information or a set of pieces of identity information that is transmitted from the terminal device 100 to the endorsement management server 500 is also referred to as a VC. The zero-knowledge proof information is referred to as a zero-knowledge proof description. Further, the endorser using the terminal device 100 is referred to as an endorser A. The terminal device 100 is an example of the information processing apparatus 10 of the first embodiment.

The terminal device 200 is a client computer that is used by a user viewer who views a content item provided by the content providing server 400. The terminal device 200 acquires the main body of the content item from the content providing server 400, acquires the endorsement data associated with the content item, and displays the content item and the endorsement data. The viewer who uses the terminal device 200 is referred to as a viewer B.

The issuing server 300 is a server computer of a certification authority that issues a VC to the endorser A. The issuing server 300 also issues, to the endorser A, a holder ID corresponding one-to-one to the endorser A. The certification authority is an issuer that issues the VC and the holder ID. For example, in the case where there are a plurality of issuers, the plurality of issuers have agreed on a method of determining the holder ID, to ensure that the holder ID is uniquely assigned to the endorser A. The issuing server 300 is an example of the first system 21 of the first embodiment.

The content providing server 400 is a server computer that provides content items. For example, the content providing server 400 functions as a Web server that provides an information sharing service, and provides the terminal devices 100 and 200 functioning as Web browsers with content items such as news articles in the information sharing service. The information sharing service is a posting-type information sharing service for collecting comments and the like on news articles from users. By disclosing a VC together with his/her post, the endorser serving as a poster is able to disclose the post while revealing the identity (for example, residence in XX city) of the endorser. By associating the post with the VC, the reliability of the post content is improved. The content providing server 400 also provides contents IDs as identification information identifying content items. A contents ID is, for example, the URL of a content item or a hash value based on the URL.

The endorsement management server 500 is a server computer that manages endorsement data. The endorsement management server 500 receives endorsement data including a VC, a hash value, and a zero-knowledge proof description from the terminal device 100, and stores them in a storage device. The endorsement management server 500 provides endorsement data to the terminal device 200. The endorsement management server 500 is an example of the second system 22 of the first embodiment.

The verifiable data registry 31 is a computer system that manages the public keys of the issuers having issued VCs, for verifying the digital signatures of the issuers. The verifiable data registry 31 provides the public keys of the issuers to the terminal device 200 or the like. The verifiable data registry 31 may manage the public keys of endorsers for verifying the digital signatures of the endorsers, and may provide the public keys of the endorsers to the terminal device 200 or the like.

The verification key management server 32 is a server computer that manages verification keys used for verifying zero-knowledge proof descriptions generated by the terminal device 100. The verification key management server 32 provides the verification keys to the terminal device 200 or the like.

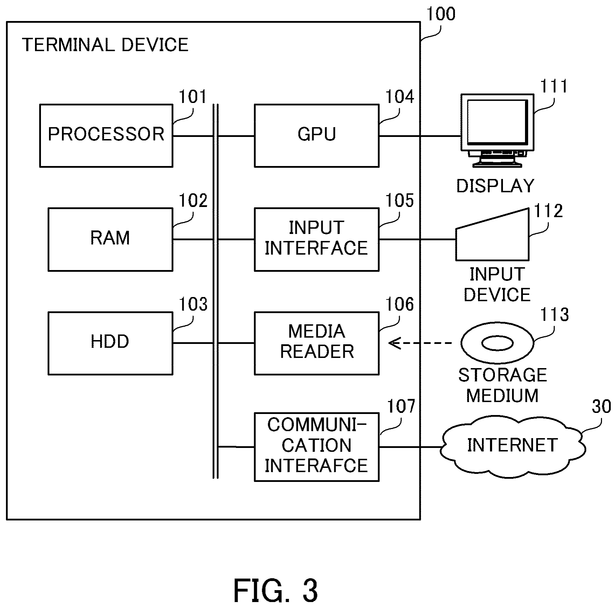

FIG. 3 is a block diagram illustrating an example of hardware of a terminal device.

The terminal device 100 includes a processor 101, a RAM 102, an HDD 103, a GPU 104, an input interface 105, a media reader 106, and a communication interface 107. These units included in the terminal device 100 are connected to a bus inside the terminal device 100. The processor 101 corresponds to the processing unit 12 of the first embodiment. The RAM 102 or the HDD 103 corresponds to the storage unit 11 of the first embodiment.

The processor 101 is a processor that executes program instructions. The processor 101 loads at least part of a program and data from the HDD 103 into the RAM 102 and executes the program. The processor 101 may include a plurality of processor cores. The terminal device 100 may include a plurality of processors. The processes described below may be performed in parallel using a plurality of processors or processor cores. A set of a plurality of processors may be referred to as a "multiprocessor" or simply as a "processor".

The RAM 102 is a volatile semiconductor memory that temporarily stores programs to be executed by the processor 101 and data to be used by the processor 101 for computation. The terminal device 100 may include another type of memory than the RAM, or may include a plurality of memories.

The HDD 103 is a non-volatile storage device that stores software programs such as an operating system (OS), middleware, and application software, and data. The terminal device 100 may include another type of storage device such as a flash memory or a solid state drive (SSD), or may include a plurality of non-volatile storage devices.

The GPU 104 outputs images to a display 111 connected to the terminal device 100 in accordance with instructions from the processor 101. The display 111 may be any type of display such as a cathode ray tube (CRT) display, a liquid crystal display (LCD), a plasma display, or an organic electro-luminescence (OEL) display.

The input interface 105 receives input signals from an input device 112 connected to the terminal device 100, and outputs the input signals to the processor 101. As the input device 112, a pointing device such as a mouse, a touch panel, a touch pad, or a trackball, a keyboard, a remote controller, a button switch, or the like may be used. A plurality of types of input devices may be connected to the terminal device 100.

The media reader 106 is a reading device that reads programs and data recorded on a storage medium 113. As the storage medium 113, for example, a magnetic disk, an optical disc, a magneto-optical disk (MO), a semiconductor memory, or the like may be used. Magnetic disks include flexible disks (FDs) and HDDs. Optical discs include compact discs (CDs) and digital versatile discs (DVDs).

For example, the media reader 106 copies a program or data read from the storage medium 113 to another storage medium such as the RAM 102 or the HDD 103. The read program is executed by, for example, the processor 101. The storage medium 113 may be a portable storage medium, and may be used to distribute programs and data. The storage medium 113 and the HDD 103 may be referred to as computer-readable storage media.

The communication interface 107 is connected to the Internet 30 and communicates with other information processing apparatuses via the Internet 30. The communication interface 107 may be a wired communication interface connected to a wired communication device such as a switch or a router, or may be a wireless communication interface connected to a wireless communication device such as a base station or an access point.

The verifiable data registry 31, the verification key management server 32, the terminal device 200, the issuing server 300, the content providing server 400, and the endorsement management server 500 are also implemented with hardware similar to that of the terminal device 100.

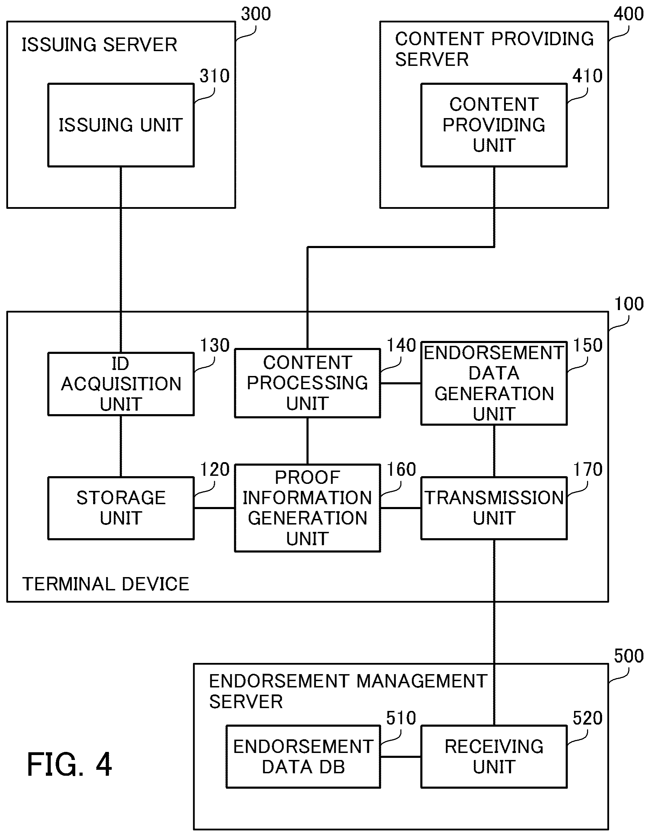

FIG. 4 is a block diagram illustrating an example (part 1) of functions of the information processing system.

The terminal device 100 includes a storage unit 120, an ID acquisition unit 130, a content processing unit 140, an endorsement data generation unit 150, a proof information generation unit 160, and a transmission unit 170. The storage area of the RAM 102 or the HDD 103 is used as the storage unit 120. The ID acquisition unit 130, the content processing unit 140, the endorsement data generation unit 150, the proof information generation unit 160, and the transmission unit 170 are implemented by the processor 101 executing programs stored in the RAM 102.

The storage unit 120 stores VCs and a holder ID, which are issued by the issuing server 300, and a digital signature Sig of the issuer with respect to the holder ID.

The ID acquisition unit 130 acquires the VCs and the holder ID, which are issued by the issuing server 300, and the digital signature Sig, and stores them in the storage unit 120. The holder ID and the digital signature Sig are kept secret.

The content processing unit 140 acquires a contents ID and a content item from the content providing server 400, and displays the content item on the display 111. The contents ID is input to the terminal device 100 as, for example, the URL of the content item that the endorser A wants to browse. The content processing unit 140 passes the contents ID to the proof information generation unit 160. In this connection, the content processing unit 140 may acquire the contents ID of the content item from a server computer other than the content providing server 400.

The endorsement data generation unit 150 generates endorsement data according to an input made by the endorser A with respect to the content item displayed by the content processing unit 140. As described above, the endorsement data includes information posted by the endorser in this example. The endorsement data generation unit 150 passes the endorsement data to the transmission unit 170.

The proof information generation unit 160 calculates a hash value y = Hash (holder ID, contents ID) based on a holder ID and a contents ID stored in the storage unit 120, and a hash function Hash. The proof information generation unit 160 generates a zero-knowledge proof description π for proving that the endorser A has knowledge of the holder ID used for calculating the hash value y and knowledge of the digital signature Sig, which is successfully verified using the public key of the issuer. The proof information generation unit 160 passes the VC of the endorser A, the hash value y, and the zero-knowledge proof description π to the transmission unit 170.

The transmission unit 170 transmits the endorsement data having the VC of the endorser A added thereto, the hash value y, and the zero-knowledge proof description π to the endorsement management server 500.

The issuing server 300 includes an issuing unit 310. The issuing unit 310 is implemented by the processor of the issuing server 300 executing a program stored in the RAM of the issuing server 300.

The issuing unit 310 issues VCs and holder IDs to endorsers. The issuing unit 310 attaches a digital signature to each of the VCs and the holder IDs using a private key of the issuer. The digital signatures for the VCs and the holder IDs may be generated using different secret keys or may be generated using the same secret key.

Here, the issuing unit 310 generates a holder ID corresponding one-to-one to the endorser A by using a combination of a plurality of identities such as a combination of the name and the telephone number of the endorser A, for example. The holder ID may be, for example, a hash value obtained by inputting a combination of a plurality of identities to a predetermined hash function.

The issuer issues the holder ID to the endorser A after confirming the personal information of the endorser A. Although not illustrated, the issuing server 300 includes a storage unit that stores management information for managing the correspondence between the holder ID issued to the endorser A and a DID of the endorser A, so as to recognize the correspondence between the holder ID and the DID. In the case where the endorser A has a plurality of DIDs, the plurality of DIDs correspond to the single holder ID. A plurality of DIDs for one endorser may be referred to as pairwise DIDs.

The content providing server 400 includes a content providing unit 410. The content providing unit 410 is implemented by the processor of the content providing server 400 executing a program stored in the RAM of the content providing server 400.

The content providing unit 410 provides content items and their contents IDs to the terminal devices 100 and 200.

The endorsement management server 500 includes an endorsement data database (DB) 510 and a receiving unit 520. The storage area of a storage device, such as an HDD or an SSD, provided in the endorsement management server 500 is used for the endorsement data DB 510. The receiving unit 520 is implemented by the processor of the endorsement management server 500 executing a program stored in the RAM of the endorsement management server 500.

The endorsement data DB 510 is a DB that holds endorsement data. The endorsement data DB 510 holds a contents ID, endorsement data including a VC of the endorser A, a hash value y, and a zero-knowledge proof description π in association with each other.

The receiving unit 520 receives the endorsement data, the hash value y, and the zero-knowledge proof description π, which correspond to a contents ID, from the terminal device 100, and stores them in the endorsement data DB 510.

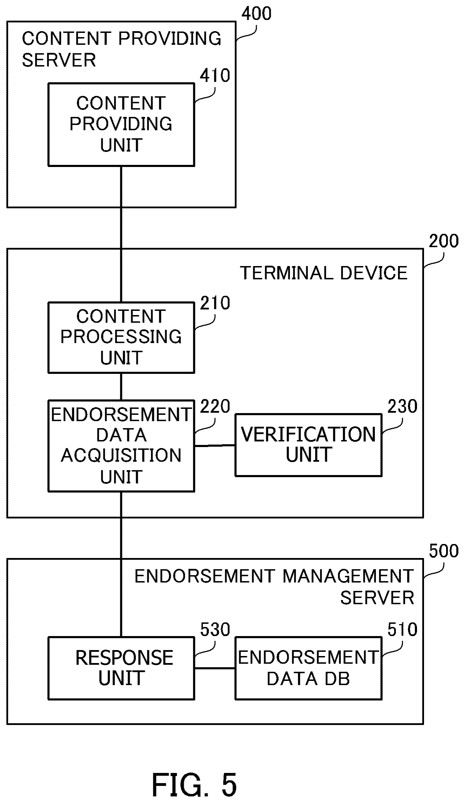

FIG. 5 is a block diagram illustrating an example (part 2) of functions of the information processing system.

The terminal device 200 includes a content processing unit 210, an endorsement data acquisition unit 220, and a verification unit 230. The content processing unit 210, the endorsement data acquisition unit 220, and the verification unit 230 are implemented by the processor of the terminal device 200 executing programs stored in the RAM of the terminal device 200.

The content processing unit 210 acquires a contents ID and a content item from the content providing server 400, and displays the content item on the display of the terminal device 200. The contents ID is input to the terminal device 200 as, for example, the URL of the content item that the viewer B wants to browse. The content processing unit 210 passes the contents ID to the endorsement data acquisition unit 220. In addition, the content processing unit 210 acquires endorsement data corresponding to the contents ID from the endorsement data acquisition unit 220, and displays the content of the endorsement data together with the content item on the display of the terminal device 200.

The endorsement data acquisition unit 220 acquires endorsement data corresponding to the contents ID from the endorsement management server 500. Specifically, the endorsement data acquisition unit 220 transmits an endorsement data acquisition request including the contents ID to the endorsement management server 500, and receives the endorsement data from the endorsement management server 500 as a response thereto. Together with the endorsement data being acquired, the VC, the hash value y, and the zero-knowledge proof description π associated with the endorsement data are also acquired. The endorsement data acquisition unit 220 causes the verification unit 230 to verify the endorsement data. The endorsement data acquisition unit 220 passes the endorsement data successfully verified by the verification unit 230, to the content processing unit 210.

The verification unit 230 verifies endorsement data. The verification of the endorsement data includes the detection of multiple posts on the basis of a hash value y, the verification of a zero-knowledge proof description π, and the verification of the digital signature attached to the VC.

The endorsement management server 500 includes a response unit 530 in addition to the endorsement data DB 510 and the receiving unit 520. The response unit 530 is implemented by the processor of the endorsement management server 500 executing a program stored in the RAM of the endorsement management server 500. In FIG. 5, the receiving unit 520 is not illustrated.

When the response unit 530 receives an endorsement data acquisition request including a contents ID from the terminal device 200, the response unit 530 extracts the endorsement data corresponding to the contents ID from the endorsement data DB 510 and returns the endorsement data to the terminal device 200 as a response.

Note that the terminal device 100 is able to have the functions of the content processing unit, the endorsement data processing unit, and the verification unit, which are included in the terminal device 200, in addition to the functions of the terminal device 100 described with reference to FIG. 4. Likewise, the terminal device 200 is able to have the functions of the storage unit, the ID acquisition unit, the content processing unit, the endorsement data generation unit, the proof information generation unit, and the transmission unit, which are included in the terminal device 100, in addition to the functions of the terminal device 200 described with reference to FIG. 5.

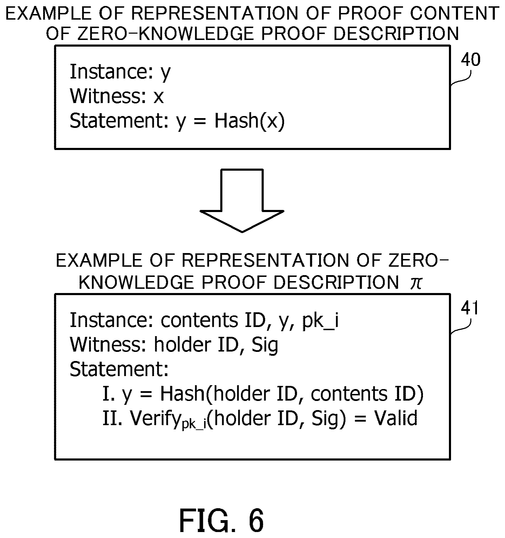

FIG. 6 illustrates an example of zero-knowledge proof descriptions.

A zero-knowledge proof description 40 is an example of representation of the proof content of the zero-knowledge proof description in the present example. "Instance" indicates information to be published (public information). "Witness" is secret information. Statement is a condition that the secret information satisfies. The zero-knowledge proof description 40 proves that the prover knows the input x for the hash value y.

A zero-knowledge proof description π is also represented following the representation of the zero-knowledge proof description 40. A zero-knowledge proof description 41 is an example of representation of the zero-knowledge proof description π. A digital signature Sig is the digital signature of the issuer with respect to the holder ID. "pk_i" is the public key of the issuer corresponding to the digital signature Sig for the holder ID. The public key pk_i is stored in the verifiable data registry 31 and is provided to the terminal devices 100 and 200 and others.

The zero-knowledge proof description π proves that the endorser A, who is the poster of endorsement data, has knowledge of the holder ID and the digital signature Sig that satisfy the statement I. and the statement II. The statement I. indicates a condition that the endorser A possesses the holder ID used for calculating the hash value y. The statement II. indicates a condition that the endorser A possesses the digital signature Sig of the issuer with respect to the holder ID, the digital signature Sig being successfully verified using the public key pk_i of the issuer.

That is, the zero-knowledge proof description π proves that the endorser A has knowledge of the holder ID used for calculating the hash value y with the hash function Hash and knowledge of the digital signature Sig of the issuer that is successfully verified using the public key pk_i of the issuer.

For example, even if the terminal device 100 is able to create a hash value y' with the hash function Hash using an unauthorized holder ID' instead of the proper holder ID, the terminal device 100 is not able to create a digital signature Sig' of the issuer for the holder ID'. Therefore, in this case, the terminal device 100 is not able to create a zero-knowledge proof description π satisfying the above statement II.

Therefore, by verifying the zero-knowledge proof description π, the verification unit 230 is able to verify whether the endorser A has posted the endorsement data with a falsified holder ID. That is, if the verification of the zero-knowledge proof description π is successful, the verification unit 230 determines that the endorser A has posted the endorsement data using the proper holder ID. If the verification of the zero-knowledge proof description π has failed, the verification unit 230 determines that the endorser A has posted the endorsement data using the unauthorized holder ID'. In this way, the terminal device 200 is able to detect inappropriate posts of the endorser A on the basis of the zero-knowledge proof description 40.

A verification key used for the verification of the zero-knowledge proof description π, which corresponds to a proof key used for the creation of the zero-knowledge proof description π, is managed by the verification key management server 32 and provided to the terminal device 200 or the like.

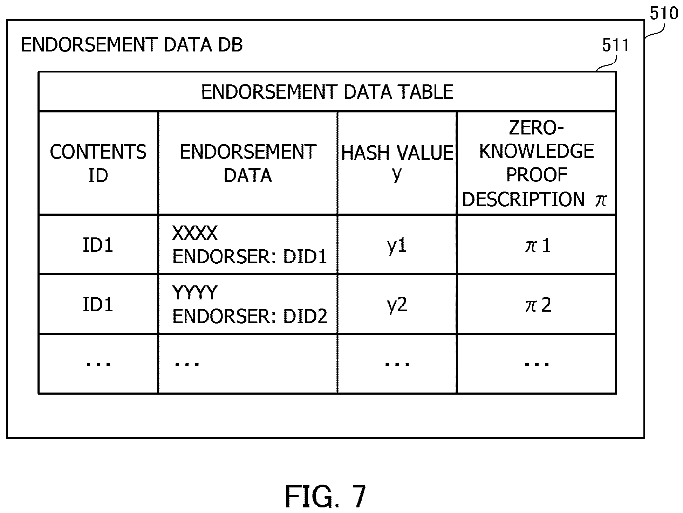

FIG. 7 illustrates an example of an endorsement data table.

An endorsement data table 511 is stored in the endorsement data DB 510. The endorsement data table 511 includes the following items: contents ID, endorsement data, hash value y, and zero-knowledge proof description π. The contents ID item contains a contents ID. The endorsement data item contains endorsement data. Although not illustrated, the endorsement data includes a VC associated with a DID of the endorser. The hash value y item contains a hash value y. The zero-knowledge proof description π item contains a zero-knowledge proof description π.

For example, the endorsement data table 511 has a record in which the contents ID item contains "ID1", the endorsement data item contains "XXXX, Endorser: DID1", the hash value y item contains "y1", and the zero-knowledge proof description π item contains "π1". This record indicates that the hash value y = y1 and the zero-knowledge proof description π = π1 are acquired together with the endorsement data "XXXX, Endorser: DID1" for the content item with the contents ID "ID1". Here, "XXXX" in the endorsement data item corresponds to the post content posted by the endorser (for example, evaluation of the content item). The DID (for example, "DID1") in the endorsement data item is a DID of the endorser who is a posting source.

In the endorsement data table 511, records of other endorsement data for the content item with the contents ID "ID1" are also registered in the same manner. Further, in the endorsement data table 511, records of other endorsement data for the contents items with other contents IDs are also registered in the same manner.

Next, processing procedures in the information processing system described above will be described. First, a processing procedure of the terminal device 100 that posts endorsement data will be described.

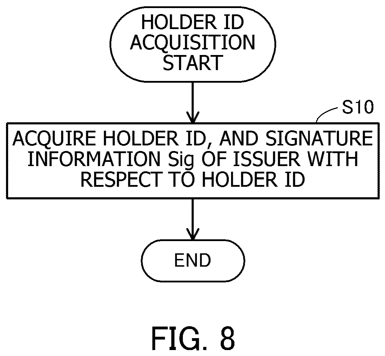

FIG. 8 is a flowchart illustrating an example of holder ID acquisition.

(S10) The ID acquisition unit 130 acquires the holder ID of the endorser A operating the terminal device 100 and the digital signature Sig of the issuer with respect to the holder ID from the issuing server 300, and stores them in the storage unit 120. Then, the holder ID acquisition ends.

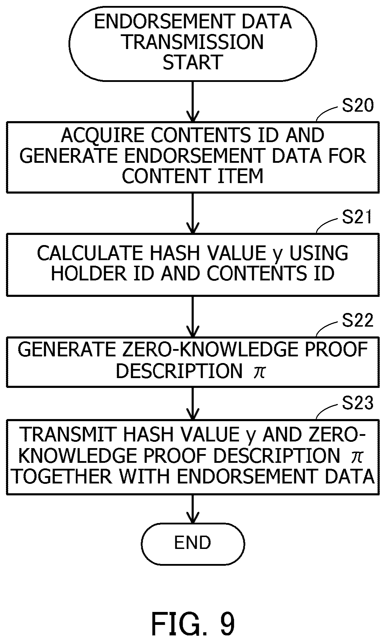

FIG. 9 is a flowchart illustrating an example of endorsement data transmission.

(S20) The content processing unit 140 acquires the contents ID of a content item to be used by the endorser A, and acquires information on the content item with the contents ID from the content providing server 400. The content processing unit 140 displays the content item on the display 111. The endorsement data generation unit 150 receives an input of post content made by the endorser A and generates endorsement data including the post content. The content processing unit 140 receives an input of an instruction to transmit the endorsement data from the endorser A.

(S21) The proof information generation unit 160 acquires the contents ID from the content processing unit 140 in response to the generation of the endorsement data, and calculates a hash value y using the holder ID and the contents ID held in the storage unit 120. The hash value y is obtained by inputting the holder ID and contents ID to a predetermined hash function Hash.

(S22) The proof information generation unit 160 generates a zero-knowledge proof description π based on the hash value y, the holder ID and contents ID used for calculating the hash value **y,** the digital signature Sig, and the public key pk_i.

(S23) The transmission unit 170 transmits the hash value y and the zero-knowledge proof description π, together with the endorsement data, to the endorsement management server 500. As described earlier, the endorsement data includes a VC of the endorser A. Then, the endorsement data transmission ends.

When the receiving unit 520 of the endorsement management server 500 receives the endorsement data from the terminal device 100, the receiving unit 520 stores the received endorsement data in the endorsement data DB 510.

In the manner described above, the terminal device 100 registers the endorsement data in the endorsement management server 500. Next, a procedure for the verification of endorsement data by the terminal device 200 used by the viewer B will be described.

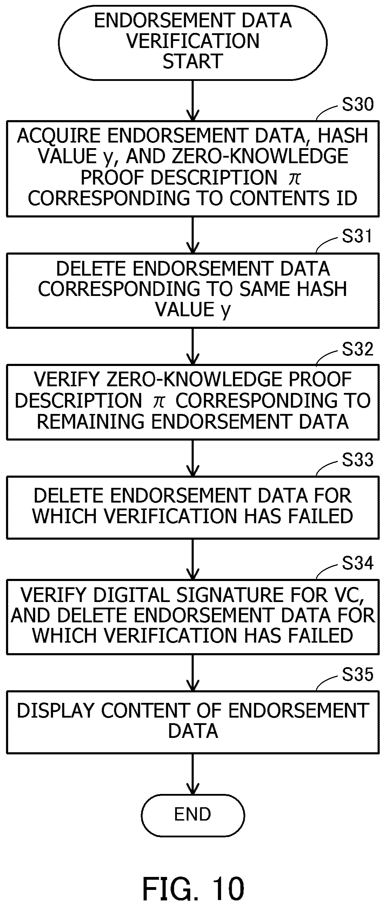

FIG. 10 is a flowchart illustrating an example of endorsement data verification.

(S30) The content processing unit 210 acquires the contents ID of a content item to be browsed by the viewer **B,** and acquires information on the content item from the content providing server 400. The content processing unit 210 passes the contents ID to the endorsement data acquisition unit 220. The endorsement data acquisition unit 220 acquires endorsement data, hash values y, and zero-knowledge proof descriptions π corresponding to the contents ID from the endorsement management server 500. For example, one or more pieces of endorsement data are acquired for a single contents ID. For example, the acquired endorsement data includes post content posted by the endorser A.

(S31) The verification unit 230 verifies the endorsement data acquired in step S30. First, the verification unit 230 deletes endorsement data corresponding to the same hash value y with respect to the acquired contents ID.

(S32) The verification unit 230 verifies each zero-knowledge proof description π corresponding to the remaining endorsement data. The verification unit 230 is able to verify the zero-knowledge proof description π based on the hash value y, the contents ID, which is public information, the public key pk_i of the issuer, and the verification key of the zero-knowledge proof description π.

(S33) The verification unit 230 deletes endorsement data for which the verification has failed.

(S34) The verification unit 230 verifies the digital signature for the VC, and deletes endorsement data for which the verification has failed. Specifically, the verification unit 230 verifies the digital signature for the VC included in the endorsement data using the public key of the issuer to confirm that the VC belongs to an endorser authenticated by the issuer. In this way, the verification unit 230 returns, to the endorsement data acquisition unit 220, only the appropriate endorsement data that has been successfully verified in steps S31 to S34. The endorsement data acquisition unit 220 passes the successfully verified endorsement data to the content processing unit 210.

(S35) The content processing unit 210 displays, on the display of the terminal device 200, the content (for example, posted comments) of the appropriate endorsement data received from the endorsement data acquisition unit 220 together with the content of the content item in question. Then, the endorsement data verification ends.

In step S31, the verification unit 230 deletes the endorsement data corresponding to the same hash value y. Alternatively, the following control may be executed in step S31. For example, the verification unit 230 may leave the oldest one among a plurality of pieces of endorsement data corresponding to the same hash value y and delete the other pieces of endorsement data. Yet alternatively, the verification unit 230 may leave the most recent one among the plurality of pieces of endorsement data corresponding to the same hash value y and delete the other pieces of endorsement data.

A digital signature of the endorser A may be attached to input information (for example, post content) of the endorser A included in endorsement data. In this case, the verification unit 230 is able to confirm the authenticity of the input information (for example, post content) in the endorsement data by acquiring the public key of the endorser A from the verifiable data registry 31 and verifying the digital signature using the public key of the endorser A.

The endorsement data verification in FIG. 10 is performed by the terminal device 200, but may be performed by the endorsement management server 500. In this case, the endorsement management server 500 has a function of the verification unit that acquires a contents ID from the terminal device 200 and executes steps S30 to S34 based on the acquired contents ID. The verification unit of the endorsement management server 500 transmits only successfully verified endorsement data corresponding to the contents ID to the terminal device 200.

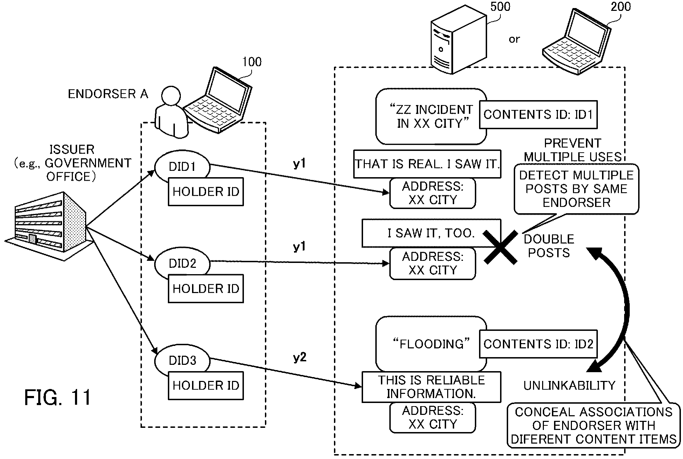

FIG. 11 illustrates an example of multiple use detection.

For example, an issuer issues a VC to each of three DIDs, i.e., DID1, DID2, and DID3, which correspond to the endorser A. In addition, the issuer issues, to the endorser A, a holder ID corresponding one-to-one to the endorser A. Here, the issuer is, for example, a public institution such as a government office that certifies an identity (address) of the endorser A as the identity information of the endorser A. The issuer may be a private certification authority. The address of the endorser A is "XX city".

For example, a content item with a contents ID of "ID1" is provided to the terminal devices 100 and 200 by the content providing server 400. The content item with the contents ID of "ID1" is, for example, a news article "ZZ incident in XX city".

The endorser A uses the terminal device 100 to submit a first post to the content item with the contents ID "ID1" using his/her own DID1. For example, the content of the first post is "That is real. I saw it." In this case, the terminal device 100 registers a hash value y1 calculated from the holder ID of the endorser A and the contents ID "ID1", together with first endorsement data including the content of the first post, in the endorsement management server 500. The first endorsement data includes, for example, a VC that corresponds to DID1 and indicates the address "XX city" of the endorser A.

In addition, the endorser A uses the terminal device 100 to submit a second post to the content item with the contents ID "ID1" using his/her own DID2. For example, the content of the second post is "I saw it, too". In this case, the terminal device 100 registers the hash value y1 calculated from the holder ID of the endorser A and the contents ID "ID1", together with second endorsement data including the content of the second post, in the endorsement management server 500. The second endorsement data includes, for example, a VC that corresponds to DID2 and indicates the address "XX city" of the endorser A.

For example, in the case where the terminal device 200 acquires the first endorsement data and the second endorsement data corresponding to the contents ID "ID1", the terminal device 200 detects that their hash values y are both y1. Therefore, the terminal device 200 determines that the first endorsement data and the second endorsement data are multiple posts submitted by the same endorser. In this case, the terminal device 200 may accept, for example, only the endorsement data corresponding to the first appearing hash value y1 generated at the time of posting, with respect to the contents ID "ID1". Alternatively, as described above, for example, the terminal device 200 may accept only the most recent one among the endorsement data of multiple posts, with respect to the contents ID "ID1". Yet alternatively, the terminal device 200 may delete all the endorsement data of multiple posts. These processes of the terminal device 200 may be performed by the endorsement management server 500. In the manner described above, the terminal device 200 or the endorsement management server 500 is able to prevent multiple uses of a content item.

In addition, for example, a content item with a contents ID of "ID2" is provided to the terminal devices 100 and 200 by the content providing server 400 or another content providing server. The content item with the contents ID "ID2" is, for example, a news article "flooding".

The endorser A uses the terminal device 100 to submit a third post to the content item with the contents ID "ID2" using his/her own DID3. For example, the content of the third post is "This is reliable information". In this case, the terminal device 100 registers a hash value y2 calculated from the holder ID of the endorser A and the contents ID "ID2", together with third endorsement data including the content of the third post, in the endorsement management server 500. The third endorsement data includes, for example, a VC that corresponds to DID3 and indicates the address "XX city" of the endorser A.

In this way, different hash values y are assigned to endorsement data for different content items. For example, the terminal device 200 and the endorsement management server 500 are not able to determine from the hash values y1 and y2 whether the first and second endorsement data and the third endorsement data are posts from the same endorser. In this way, the associations of the endorser with the different content items are concealed. In the information processing system, a function of concealing the associations of an endorser to different content items is called unlinkability.

Next, a comparative example relative to FIG. 11 will be described.

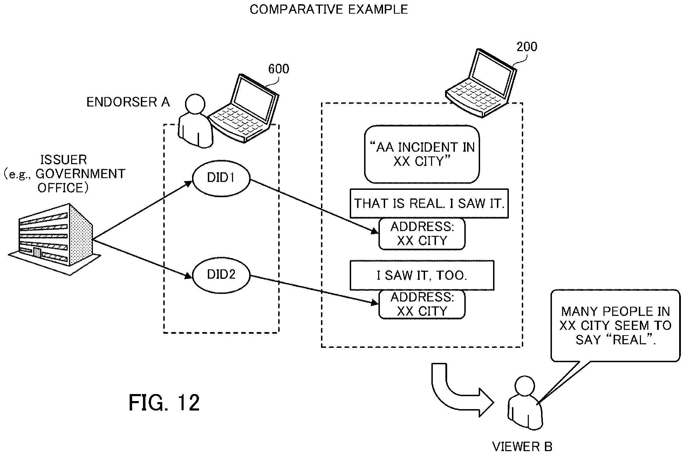

FIG. 12 illustrates a comparative example.

In the comparative example, the endorser A submits a post to a content item using a terminal device 600 instead of the terminal device 100. In the comparative example, no holder ID is issued to the endorser A. Therefore, the endorser who is a posting source for the content item is identified using an DID by the terminal device 200 or the like.

For example, for a content item "AA incident in XX city" with a contents ID "ID1", the endorser A uses the terminal device 600 to submit a first post, "That is real. I saw it.", using a DID1. A VC that corresponds to the DID1 and indicates the address "XX city" of the endorser A is assigned to the first post, for example.

In addition, the endorser A uses the terminal device 600 to submit a second post, "I saw it, too.", using a DID2 for the content item with the contents ID "ID1". A VC that corresponds to the DID2 and indicates the address "XX city" of the endorser A is assigned to the second post, for example.

In this case, the first post and the second post submitted by the endorser A are associated with the different DIDs. Therefore, for example, the terminal device 200 presents these two posts to the viewer B as posts from different people (endorsers). Therefore, with a plurality of DIDs, the endorser A is able to impersonate a plurality of persons by using multiple VCs (multiple posts in this example) for one content item. For example, such multiple posts may give the viewer B a false impression, such as "many people in XX City seem to say "real"". By maliciously making multiple posts, the endorser A is able to manipulate information in a way that misleads an unspecified number of viewers, for example, makes the public believe that a false news article is real.

By contrast, in the information processing system according to the second embodiment, an endorser who is a posting source is identified using a hash value y corresponding to a set of a holder ID and a contents ID, and thus multiple posts associated with different DIDs of the same endorser are detected without fail. That is, the terminal device 100 transmits the hash value y corresponding to the set of the holder ID and the contents ID together with endorsement data, which makes it possible to detect multiple uses of the content item carried out over a plurality of times by the same endorser using a plurality of VCs. In addition, the terminal device 100 proves, using a zero-knowledge proof description π, the authenticity of the holder ID used for calculating the hash value y, which makes it possible to prevent the use of an unauthorized holder ID'. For example, it is possible to prevent information manipulation through multiple posts from the endorser A.

As described above, the information processing system according to the second embodiment performs the following process.

The terminal device 100 acquires first identification information corresponding one-to-one to a first user, issued by a first system that issues identification information of users. The terminal device 100 acquires second identification information of a content item to be used by the first user. When transmitting input information input by the first user with respect to the content item and the identity information of the first user to a second system, the terminal device 100 transmits a hash value y corresponding to a set of the first identification information and the second identification information to the second system, the hash value y being used to identify the user of the content item.

Thus, the terminal device 100 makes it possible to detect, based on the hash value y, multiple uses of the content item carried out using a plurality of VCs.

Here, the issuing server 300 is an example of the first system. The endorsement management server 500 is an example of the second system. The endorser A is an example of the first user. The holder ID is an example of the first identification information. The contents ID is an example of the second identification information. Post information (a posted comment, an evaluation value, or the like) indicating post content posted by the endorser A in an information sharing service is an example of the input information. For example, the input information may be text information, audio information, or video information such as a still image or a moving image. The VC or VP is an example of the identity information. It may also be said that the identity information transmitted from the terminal device 100 to the second system is information generated by the terminal device 100 based on a verifiable credential (VC) issued by a predetermined issuer (first system).

The terminal device 100 may further acquire the digital signature Sig of the issuer with respect to the first identification information. The terminal device 100 may generate zero-knowledge proof information π for proving that the first user has knowledge of the first identification information used for calculating the hash value y and knowledge of the digital signature Sig, which is successfully verified using the public key pk_i of the issuer. The terminal device 100 may transmit the zero-knowledge proof information π to the second system.

Thus, the terminal device 100 is able to prevent the use of the content item that is done using unauthorized information as the first identification information. As a result, the terminal device 100 is able to improve the reliability of input information created by each user. The zero-knowledge proof information π may be referred to as a zero-knowledge proof description π.

The second system stores the input information, the identity information, and the hash value y in association with the second identification information. The second system or an information processing apparatus that acquires the input information from the second system restricts the output of at least one of the plurality of pieces of input information corresponding to the same hash value y with respect to the second identification information.

As a result, the output of the input information transmitted over a plurality of times by the same user with respect to one content item is prevented. Note that the terminal device 200 is an example of the information processing apparatus that acquires input information from the second system. The endorsement data DB 510 is an example of the storage unit of the second system that is a storage destination of the input information.

Here, for example, the following methods are employed to restrict the output of at least one of a plurality of pieces of input information corresponding to the same hash value **y.**

A first method is a method that does not output any of a plurality of pieces of input information corresponding to the same hash value with respect to the second identification information.

A second method is a method that outputs only the oldest one among a plurality of pieces of input information corresponding to the same hash value with respect to the second identification information.

A third method is a method that outputs only the most recent one among a plurality of pieces of input information corresponding to the same hash value with respect to the second identification information.

As a fourth method, the second system may determine whether the current hash value y has been received in the past with respect to the second identification information. In this case, with respect to the second identification information, the second system discards the input information corresponding to the current hash value y if the current hash value y has been received in the past, and otherwise stores the current input information.

Furthermore, the second system may store the input information, the identity information, the hash value y, and the zero-knowledge proof information π in association with the second identification information. The second system or the information processing apparatus that acquires the input information from the second system may restrict output of at least one of the plurality of pieces of input information corresponding to the same hash value y with respect to the second identification information, and may restrict output of input information for which the verification of the zero-knowledge proof information π has failed.

Accordingly, the output of the input information transmitted using unauthorized information as the first identification information is properly controlled. For example, in the restriction of the output of the input information for which the verification of the zero-knowledge proof information π has failed, the output of the input information is prevented. This makes it possible to present, for example, only reliable input information to the viewer B.

Here, the second system or the information processing apparatus that acquires the input information from the second system may further verify the digital signature of the issuer attached to the identity information, and may restrict the output of the input information depending on the verification result. More specifically, another digital signature of the issuer having issued the identity information is attached to the identity information. In this case, the second system or the information processing apparatus that acquires the input information from the second system may restrict output of the input information corresponding to the identity information for which the verification of the other digital signature has failed. In this restriction of the output, for example, the output of the input information is prevented. This further improves the reliability of the input information.

Further, the identity information may include a distributed identifier (DID). The first user is allowed to possess more than one DID. That is, the functions of the terminal device 100, the terminal device 200, and the endorsement management server 500 are particularly suitable for improving the reliability of input information input by users in a distributed identity infrastructure in which the identity information of the users is managed using DIDs.

The above-described processing of the terminal device 100 described above is performed by the processor 101. The processing of the second system is performed by the processor of the second system. The processing of the information processing apparatus that acquires input information from the second system is performed by the processor of the information processing apparatus.

The information processing of the first embodiment is implemented by causing the processing unit 12 to execute a program. The information processing of the second embodiment is implemented by causing the processor 101 to execute a program. Such a program may be stored on the computer-readable storage medium 113.

For example, the program may be distributed by distributing the storage medium 113 on which the program is stored. Alternatively, the program may be stored in another computer and distributed via a network. For example, a computer may store (install) the program stored on the storage medium 113 or the program received from another computer, in a storage device such as the RAM 102 or the HDD 103, read the program from the storage device, and execute the program.

The following supplementary notes are additionally provided in connection with the embodiments including the above-described first and second embodiments.

(Supplementary Note 1) A computer program that causes a computer to perform a process including:
acquiring first identification information corresponding one-to-one to a first user, issued by a first system, and acquiring second identification information of a content item to be used by the first user, the first system being configured to issue identification information of users; and
transmitting a hash value corresponding to a set of the first identification information and the second identification information to a second system in transmitting input information input by the first user with respect to the content item and identity information of the first user to the second system, the hash value being used to identify a user of the content item.

(Supplementary Note 2) The computer program according to supplementary note 1, wherein the process further includes:
acquiring a digital signature of an issuer with respect to the first identification information;
generating zero-knowledge proof information for proving that the first user has knowledge of the first identification information used for calculating the hash value and knowledge of the digital signature, the digital signature being successfully verified using a public key of the issuer; and
transmitting the zero-knowledge proof information to the second system.

(Supplementary Note 3) The computer program according to supplementary note **1,** wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

(Supplementary Note 4) The computer program according to supplementary note 2, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

(Supplementary Note 5) The computer program according to supplementary note 3 or 4, wherein
an other digital signature of an issuer having issued the identity information is attached to the identity information, and
the second system or the information processing apparatus restricts output of the input information corresponding to the identity information for which verification of the other digital signature has failed.

(Supplementary Note 6) The computer program according to supplementary note 1, wherein the identity information includes a distributed identifier, the distributed identifier being allowed to be held in plurality by the first user.

(Supplementary Note 7) An information processing method executed by a computer, the information processing method including:
acquiring first identification information corresponding one-to-one to a first user, issued by a first system, and acquiring second identification information of a content item to be used by the first user, the first system being configured to issue identification information of users; and
transmitting a hash value corresponding to a set of the first identification information and the second identification information to a second system in transmitting input information input by the first user with respect to the content item and identity information of the first user to the second system, the hash value being used to identify a user of the content item.

(Supplementary Note 8) The information processing method according to supplementary note 7, further including:
acquiring a digital signature of an issuer with respect to the first identification information;
generating zero-knowledge proof information for proving that the first user has knowledge of the first identification information used for calculating the hash value and knowledge of the digital signature, the digital signature being successfully verified using a public key of the issuer; and
transmitting the zero-knowledge proof information to the second system.

(Supplementary Note 9) The information processing method according to supplementary note 7, wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

(Supplementary Note 10) The information processing method according to supplementary note 8, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

(Supplementary Note 11) The information processing method according to supplementary note 9 or 10, wherein
an other digital signature of an issuer having issued the identity information is attached to the identity information, and
the second system or the information processing apparatus restricts output of the input information corresponding to the identity information for which verification of the other digital signature has failed.

(Supplementary Note 12) The information processing method according to supplementary note 7, wherein the identity information includes a distributed identifier, the distributed identifier being allowed to be held in plurality by the first user.

(Supplementary Note 13) An information processing apparatus including:
a storage unit for storing first identification information corresponding one-to-one to a first user, issued by a first system, the first system being configured to issue identification information of users; and
a processing unit for acquiring second identification information of a content item to be used by the first user, and transmitting a hash value corresponding to a set of the first identification information and the second identification information to a second system in transmitting input information input by the first user with respect to the content item and identity information of the first user to the second system, the hash value being used to identify a user of the content item.

(Supplementary Note 14) The information processing apparatus according to supplementary note 13, wherein the processing unit further
acquires a digital signature of an issuer with respect to the first identification information,
generates zero-knowledge proof information for proving that the first user has knowledge of the first identification information used for calculating the hash value and knowledge of the digital signature, the digital signature being successfully verified using a public key of the issuer, and
transmits the zero-knowledge proof information to the second system.

(Supplementary Note 15) The information processing apparatus according to supplementary note 13, wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

(Supplementary Note 16) The information processing apparatus according to supplementary note 14, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

(Supplementary Note 17) The information processing apparatus according to supplementary note 15 or 16, wherein
an other digital signature of an issuer having issued the identity information is attached to the identity information, and
the second system or the information processing apparatus restricts output of the input information corresponding to the identity information for which verification of the other digital signature has failed.

(Supplementary Note 18) The information processing apparatus according to supplementary note 13, wherein
the identity information includes a distributed identifier, the distributed identifier being allowed to be held in plurality by the first user.

### Reference Signs List

- 10: Information processing apparatus
- 11: Storage unit
- 12: Processing unit
- 20: Network
- 21: First system
- 22: Second system

## Claims

1. A computer program that causes a computer to perform a process comprising:
acquiring first identification information corresponding one-to-one to a first user, issued by a first system, and acquiring second identification information of a content item to be used by the first user, the first system being configured to issue identification information of users; and
transmitting a hash value corresponding to a set of the first identification information and the second identification information to a second system in transmitting input information input by the first user with respect to the content item and identity information of the first user to the second system, the hash value being used to identify a user of the content item.

2. The computer program according to claim **1,** wherein the process further includes:
acquiring a digital signature of an issuer with respect to the first identification information;
generating zero-knowledge proof information for proving that the first user has knowledge of the first identification information used for calculating the hash value and knowledge of the digital signature, the digital signature being successfully verified using a public key of the issuer; and
transmitting the zero-knowledge proof information to the second system.

3. The computer program according to claim 1, wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

4. The computer program according to claim 2, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

5. The computer program according to claim 3 **or 4,** wherein
an other digital signature of an issuer having issued the identity information is attached to the identity information, and
the second system or the information processing apparatus restricts output of the input information corresponding to the identity information for which verification of the other digital signature has failed.

6. The computer program according to claim **1,** wherein the identity information includes a distributed identifier, the distributed identifier being allowed to be held in plurality by the first user.

7. An information processing method executed by a computer, the information processing method comprising:
acquiring first identification information corresponding one-to-one to a first user, issued by a first system, and acquiring second identification information of a content item to be used by the first user, the first system being configured to issue identification information of users; and
transmitting a hash value corresponding to a set of the first identification information and the second identification information to a second system in transmitting input information input by the first user with respect to the content item and identity information of the first user to the second system, the hash value being used to identify a user of the content item.

8. The information processing method according to claim 7, further comprising:
acquiring a digital signature of an issuer with respect to the first identification information;
generating zero-knowledge proof information for proving that the first user has knowledge of the first identification information used for calculating the hash value and knowledge of the digital signature, the digital signature being successfully verified using a public key of the issuer; and
transmitting the zero-knowledge proof information to the second system.

9. The information processing method according to claim 7, wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

10. The information processing method according to claim 8, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

11. The information processing method according to claim 9 or 10, wherein
an other digital signature of an issuer having issued the identity information is attached to the identity information, and
the second system or the information processing apparatus restricts output of the input information corresponding to the identity information for which verification of the other digital signature has failed.

12. The information processing method according to claim 7, wherein the identity information includes a distributed identifier, the distributed identifier being allowed to be held in plurality by the first user.

13. An information processing apparatus comprising:
a storage unit for storing first identification information corresponding one-to-one to a first user, issued by a first system, the first system being configured to issue identification information of users; and
a processing unit for acquiring second identification information of a content item to be used by the first user, and transmitting a hash value corresponding to a set of the first identification information and the second identification information to a second system in transmitting input information input by the first user with respect to the content item and identity information of the first user to the second system, the hash value being used to identify a user of the content item.

14. The information processing apparatus according to claim 13, wherein the processing unit further
acquires a digital signature of an issuer with respect to the first identification information,
generates zero-knowledge proof information for proving that the first user has knowledge of the first identification information used for calculating the hash value and knowledge of the digital signature, the digital signature being successfully verified using a public key of the issuer, and
transmits the zero-knowledge proof information to the second system.

15. The information processing apparatus according to claim 13, wherein
the second system stores the input information, the identity information, and the hash value in association with the second identification information, and
the second system or an information processing apparatus that acquires the input information from the second system restricts output of at least one of a plurality of pieces of input information corresponding to a same hash value with respect to the second identification information.

16. The information processing apparatus according to claim 14, wherein
the second system stores the input information, the identity information, the hash value, and the zero-knowledge proof information in association with the second identification information, and
the second system or an information processing apparatus that acquires the input information from the second system restricts output of at least one of a plurality of pieces of input information corresponding to a same hash value with respect to the second identification information, and restricts output of the input information for which verification of the zero-knowledge proof information has failed.

17. The information processing apparatus according to claim 15 or 16, wherein
an other digital signature of an issuer having issued the identity information is attached to the identity information, and
the second system or the information processing apparatus restricts output of the input information corresponding to the identity information for which verification of the other digital signature has failed.

18. The information processing apparatus according to claim 13, wherein the identity information includes a distributed identifier, the distributed identifier being allowed to be held in plurality by the first user.
